# EUROPÄISCHE PATENTSCHRIFT

(11) **EP 3 213 859 B1**
(45) Veröffentlichungstag und Bekanntmachung des Hinweises auf die Patenterteilung: **17.05.2023**
(21) Anmeldenummer: 16158135.0
(22) Anmeldetag: 01.03.2016
(51) Int. Cl.: B23K 26/16, B23Q 11/00, B08B 15/00

(54) **LASERBEARBEITUNGSMASCHINE MIT RESTSTOFFENTFERNUNGSVORRICHTUNG**
LASER PROCESSING MACHINE WITH RESIDUE REMOVING DEVICE
MACHINE DE TRAITEMENT AU LASER AVEC DISPOSITIF D'ÉLIMINATION DES RÉSIDUS

(43) Veröffentlichungstag der Anmeldung: 06.09.2017
(73) Patentinhaber: Bystronic Laser AG, 3362 Niederönz (CH)
(72) Erfinder: Oberholzer, Heinz, 4665 Küngoldingen (CH); Wüthrich, Matthias, 4900 Langenthal (CH)
(74) Vertreter: Schwarz, Claudia

(56) Entgegenhaltungen:
- EP-A1- 1 010 493
- WO-A1-2015/068649
- DE-A1-102011 050 749
- US-A1- 2008 028 907

## Beschreibung

Die Erfindung betrifft eine Laserbearbeitungsmaschine, nach dem Oberbegriff des Anspruchs 1.

Während der Laserbearbeitung und insbesondere beim Laserschneiden fallen im Staubsammelraum der Laserbearbeitungsmaschine Rauchgase und Reststoffe an, wie z. B geschmolzenes Werkstückmaterial oder Staub, die sich an der Werkstückunterseite absetzen. Das bearbeitete Werkstück, z. B. ein Blech, kann dadurch derart verunreinigt werden, dass vor einer nachträglichen Lackierung eine mechanische Reinigung erforderlich ist, da ansonsten die Lackierung nicht am Werkstück anhaftet.

Um den im Staubsammelraum anfallenden Staub sowie das Rauchgas abzuführen, sind Laserbearbeitungsmaschinen bekannt, bei denen eine Strömung erzeugt wird.

In der DE102011050749A1 ist beispielsweise eine Laserbearbeitungsmaschine mit einer mitfahrenden Absaugeinrichtung gezeigt, die an der dem Laserbearbeitungskopf zugewandten Seite des Werkstücks anfallende Reststoffe absaugt.

Nachteilig an der bekannten Lösung ist, dass insbesondere die im Staubsammelraum anfallenden Rauchgase nur beschränkt mit der Absaugeinrichtung abgeführt werden. Im Staubsammelraum befindliche Reststoffe können mit dieser bekannten Lösung gar nicht beseitigt werden.

In der WO2015068649A1 ist beispielsweise eine Laserbearbeitungsmaschine gezeigt, die einen Laserbearbeitungskopf, einen Auflagerost, der eine Auflageebene für die Auflage eines zu bearbeitenden Werkstücks definiert, eine Fluidzuführeinrichtung und eine Fluidabführeinrichtung aufweist. Die Fluidzuführeinrichtung und die Fluidabführeinrichtung sind zur Erzeugung einer Fluidströmung (hier einer Luftströmung) unterhalb der Auflageebene des Auflagerostes zur Abführung insbesondere von Rauchgas und Staub ausgebildet.

Um den Energieverbrauch für die Erzeugung der Strömung klein zu halten, sind im Staubsammelraum der Laserbearbeitungsmaschine gemäß der WO2015068649A1 Leitbleche vorgesehen, welche denselben in Staubsammelraumabschnitte unterteilen. Für jeden Staubsammelraumabschnitt sind eine Fluidzuführeinrichtung und eine Fluidabführeinrichtung vorgesehen.

Nachteilig an der bekannten Lösung ist, dass die Laserbearbeitungsmaschine und insbesondere die Ausgestaltung des Staubsammelraums materialintensiv und aufwändig in der Herstellung sind.

Bei einer Zuführung des Fluides über die ganze Länge und Breite des Staubsammelraums beziehungsweise der Laserbearbeitungsmaschine gemäß der WO2015068649A1 würde sehr viel Energie verschwendet, da dabei auch in Bereichen Strömungen erzeugt werden, in denen der Laserbearbeitungskopf das Werkstück nicht bearbeitet.

Aus der EP 1 010 493 ist es bekannt, einen zusätzlichen Gasstrom von oben gegen die Werkstückoberfläche zu führen, um einen Laserbearbeitungsprozess durch die modifizierte Gaszufuhr zu verbessern.

Weiter zeigt die US 2008/0028907 eine Laserbearbeitungsmaschine mit einer Gebläseanordnung zur Belüftung des Inneren eines geschlossenen Werktisches.

Aufgabe der vorliegenden Erfindung ist es somit, eine Laserbearbeitungsmaschine, insbesondere eine Laserschneidmaschine, zu schaffen, welche die vorgenannten Nachteile nicht aufweist und welche insbesondere bei Gewährleistung einer ausreichenden Abführung von Rauchgas und Staub zuverlässig arbeitet und energieeffizient und einfach herstellbar ist.

Die Aufgabe wird durch die Merkmale des unabhängigen Anspruchs gelöst. Vorteilhafte Weiterbildungen sind in den Figuren und in den abhängigen Patentansprüchen dargelegt.

Gemäß der Erfindung ist die zumindest eine Fluidzuführeinrichtung mit dem Laserbearbeitungskopf verfahrbar.

Die zumindest eine Fluidzuführeinrichtung umfasst eine Fluidzuführung, einen Verteiler, welcher eine gewisse Strahlbreite des Laserbearbeitungskopfes abdeckt, und zumindest eine Austrittsöffnung für das Fluid, welche die Strömungsform, die Strömungsweite und die Strömungsgeschwindigkeit beeinflusst.

Da das Fluid damit gezielt und gerichtet von der zumindest einen Fluidzuführeinrichtung zugeführt wird, erfolgt die Fluidzuführung nur in dem Bereich, wo es für die Entfernung von Reststoffen und Rauchgasen erforderlich und vorteilhaft optimal ist. Für eine sichere und einfache Entrauchung des Staubsammelraumes sind keine weiteren oder nur eingeschränkte konstruktive Maßnahmen im Staubsammelraum der Laserbearbeitungsmaschine erforderlich. Neben der einfacheren konstruktiven Ausgestaltung der Laserbearbeitungsmaschine lassen sich auch die Anforderungen an deren Steuerung reduzieren.

Aufgrund der gezielten Strömung werden auch sogenannte Totwasserzonen im Staubsammelraum vermieden.

Durch die gerichtete Strömung kann mit wenig Energie ein guter Zufluss von Fluid und eine gute Abtrennung zum Rauchgas aufgebaut werden. Durch die effiziente Entrauchung des Staubsammelraums sowie der entstehenden schützenden Grenzschicht zwischen der Werkstückunterseite und dem Rauchgas werden unerwünschte Ablagerungen an der Werkstückunterseite verhindert.

Zudem wird beim Bearbeitungsprozess anfallende Schlacke und das flüssige Werkstückmaterial, entstanden durch den Laserbearbeitungsprozess, direkt gekühlt und der Staubsammelraum nicht mehr von diesem beschädigt. Des Weiteren ermöglicht die erfindungsgemäße Ausgestaltung der Laserbearbeitungsmaschine Laser mit höherer Leistung (z. B. ab 6kW) einzusetzen, da deren schädigender Einfluss als Einschränkung der Laserleistung durch die erzeugte Strömung reduziert wird. Damit wird die Gefahr einer Beschädigung des Staubsammelraums maßgeblich reduziert und somit dessen Gebrauchstauglichkeit wesentlich verlängert.

Die zumindest eine Fluidabführeinrichtung ist vorteilhaft stationär angeordnet, was zusätzlich eine einfache konstruktive und kostengünstige Ausgestaltung der Laserbearbeitungsmaschine ermöglicht. Zudem kann die zumindest eine Fluidabführeinrichtung mit einem geringeren Energieverbrauch betrieben werden, da die Rauchgase durch die gezielte Strömung in Richtung der zumindest einen Fluidabführeinrichtung strömen.

Die zumindest eine Fluidabführeinrichtung umfasst vorteilhaft zumindest ein Filterelement, welches zumindest einen Teil des Rauchgases und Schnittstaubs aufnimmt und so eine Kontaminierung der Umgebung der Laserbearbeitungsmaschine verhindert oder zumindest maßgeblich reduziert.

Weiter entfallen bei der erfindungsgemäßen Laserbearbeitungsmaschine eine Vielzahl von Ventilen wie auch eine Steuerung der Vielzahl von Ventilen, da eine sektionsweise Zuführung des Fluids entfällt. Aufgrund der einfacheren Fluidzuführung treten in derselben auch keine maßgeblichen Druckverluste mehr auf, was sich zusätzlich positiv auf den Energieverbrauch der Laserbearbeitungsmaschine auswirkt. Eine konstruktive Umgestaltung beziehungsweise besondere Ausgestaltung des Rahmens der Laserbearbeitungsmaschine zur Zuführung des Fluides erübrigt sich dadurch. Die gesamte Konstruktion der Laserbearbeitungsmaschine wird durch die erfindungsgemäße Lösung wesentlich vereinfacht, was sich vorteilhaft auf deren Herstellungskosten auswirkt.

Vorteilhaft ist die zumindest eine Fluidzuführeinrichtung mit dem Laserbearbeitungskopf parallel in eine Verfahrrichtung desselben verfahrbar, womit die zumindest eine Fluidzuführeinrichtung und der Laserbearbeitungskopf im räumlichen Bezug eine gleichbleibende Ausrichtung beim Verfahren derselben relativ zueinander aufweisen. Die zumindest eine Fluidzuführeinrichtung mit dem Laserbearbeitungskopf werden besonders vorteilhaft simultan miteinander bewegt.

Die zumindest eine Fluidzuführeinrichtung und der Laserbearbeitungskopf weisen dazu vorteilhaft eine konstruktiv ausgestaltete Kopplung auf. In einer solchen Ausgestaltung wird auch die Zuführung des Fluides konstruktiv vereinfacht, da die Fluidleitung an beziehungsweise in der Kopplung angeordnet werden kann.

Auch lässt sich damit die Gesamtlänge der Fluidleitung gegenüber den herkömmlichen Ausführungen reduzieren, was sich insbesondere in Bezug auf die Druckverhältnisse positiv auswirkt. Dafür wird beispielsweise die fixe Zuführung in oder nahe der Mitte des gesamten Verfahrwegs vorgesehen.

Bevorzugt umfasst der Auflagerost mehrere, parallel und in einem Abstand beabstandet zueinander angeordnete Rostelemente, wobei die zumindest eine Fluidzuführeinrichtung zur Erzeugung einer parallel zu den Rostelementen verlaufenden Fluidströmung ausgebildet ist. Diese Rostelemente bilden somit Leitelemente für die Strömung und verbessern die Zufuhr des Fluids und die Abfuhr von Rauchgasen und Reststoffen zusätzlich. Vorteilhaft weisen alle Rostelemente in etwa den gleichen Abstand zueinander auf. Versuche haben gezeigt, dass mit einer bis zu 12-mal geringeren Menge an Fluid eine ausreichende Strömung zur Abführung der Reststoffe erzeugbar ist.

Vorzugsweise sind die zumindest eine Fluidzuführeinrichtung und der Laserbearbeitungskopf an einer gemeinsamen Brücke angeordnet, die relativ zu dem Auflagerost verfahrbar ist. Die Brücke, auch Schneidbrücke genannt, überspannt üblicherweise vollständig den Auflagerost in eine Richtung desselben und dient der Positionierung des Laserbearbeitungskopfes relativ zu dem bearbeitenden Werkstück für den Bearbeitungsprozess. Durch die Anordnung der zumindest einen Fluidzuführeinrichtung an der Brücke wird in einfacher Art sichergestellt, dass die zumindest eine Fluidzuführeinrichtung auch bei einem Umpositionieren des Laserbearbeitungskopfes in der gewünschten Ausrichtung zur Erzeugung einer optimalen Strömung zu diesem steht. Die Fluidzuführung ist vorteilhaft ebenfalls an der Brücke angebracht.

In einer alternativen Ausführungsform ist die zumindest eine Fluidzuführeinrichtung an einer separaten Führung angeordnet und entlang des Auflagerostes verfahrbar, wobei die dazu erforderliche Steuerung vorteilhaft mit der Steuerung des Laserbearbeitungskopfes gekoppelt oder zumindest mit dieser synchronisiert ist. Damit kann auch ein paralleles Verfahren der zumindest einen Fluidzuführeinrichtung und der Laserbearbeitungskopf trotz ihrer separaten Ausgestaltung sichergestellt werden. Die separate Führung umfasst beispielsweise eine Führungsschiene, entlang oder auf welcher die zumindest eine Fluidzuführeinrichtung beim Verfahren geführt ist.

Beide der vorgenannten Varianten gewährleisten, dass mit einer geringen Menge des Fluids unterhalb des Werkstücks eine gerichtete Strömung in Richtung des Arbeitspunktes des Laserbearbeitungskopfes erzeugt werden kann. Bevorzugt ist die zumindest eine Fluidzuführeinrichtung relativ zur Auflageebene des Auflagerostes einstellbar, z. B. verfahrbar, womit der Abstand der Fluidzuführung relativ zur Auflageebene des Auflagerostes bedarfsweise anpassbar ist. Für eine einfache Ausgestaltung der entsprechenden Konstruktion und der Steuerung dazu ist die zumindest eine Fluidzuführeinrichtung vorteilhaft senkrecht zur Auflageebene des Auflagerostes verschwenkbar und/oder verfahrbar.

Erfindungsgemäß weist die zumindest eine Fluidzuführeinrichtung zumindest eine Düse auf, womit eine gezielte Zuführung des Fluides und somit eine gerichtete Strömung einfach sichergestellt wird.

Unter dem Begriff "Düse" wird in diesem Zusammenhang eine rohrförmige Vorrichtung mit einer Länge und einer Austrittsöffnung verstanden. Der Querschnitt der Düse weist über die gesamte Länge den gleichen Flächeninhalt auf, erweitert oder verjüngt sich. Je nach Bedarf kann eine Düse auch eine komplexere und/oder über die Länge variierende Form des Querschnitts aufweisen. Der Querschnitt selbst kann rund, kreisrund oder polygonal ausgestaltet sein, wobei die Länge und Breite des Querschnitts stark voneinander abweichen. Insbesondere die Austrittsöffnung der Düse kann auch in Form eines Schlitzes ausgebildet sein.

Mit der zumindest einen Düse lässt sich z. B. die Strömungsform, die Strömungsweite und/oder die Strömungsgeschwindigkeit der erzeugten Strömung entsprechend der Anforderungen und Wünsche beeinflussen.

Bevorzugt weist die zumindest eine Fluidzuführeinrichtung mehrere, nebeneinander angeordnete Düsen auf. Dabei können die Düsen bedarfsweise alle gleich beziehungsweise gleichartig ausgebildet oder unterschiedlich ausgebildet sein. Mit den mehreren Düsen lässt sich bei Gewährleistung der gerichteten Strömung die Breitenausdehnung derselben erhöhen und dadurch ein größerer Bereich unterhalb des Laserbearbeitungskopfes abdecken. Vorteilhaft sind die Düsen derart zueinander beabstandet angeordnet, dass durch den Auflagerost der Verlauf der von der zumindest einen Fluidzuführeinrichtung erzeugten Strömung nicht nachteilig beeinflusst wird.

Vorzugsweise sind mehrere der Düsen auf einer gemeinsamen Linie angeordnet, womit sich einfach eine gerichtete Strömung mit breiter Ausdehnung erzeugen lässt.

Als besonders vorteilhaft zur Erzeugung einer idealen Strömung hat sich eine Anordnung mehrere Düsen auf einer gemeinsamen Linie erwiesen, welche derart ausgerichtet ist, dass diese parallel zur Auflageebene des Auflagerostes verläuft.

Erfindungsgemäß ist die zumindest eine Düse unterhalb der Auflageebene des Auflagerostes angeordnet, womit ein Verlauf der erzeugten Strömung unterhalb des zu bearbeitenden Werkstücks gewährleistet ist.

Ist eine Fluidzuführeinrichtung mit mehreren Düsen vorgesehen, so werden vorteilhaft alle Düsen unterhalb der Auflageebene des Auflagerostes angeordnet, womit sich eine für die Abführung der Reststoffe vorteilhafte Strömung erzeugen lässt.

In einer Variante kann neben der zumindest einen, unterhalb der Auflageebene des Auflagerostes angeordneten Düse zumindest eine weitere Düse oberhalb der Auflageebene des Auflagerostes angeordnet sein, so dass oberhalb des Werkstücks ebenfalls eine Strömung erzeugt wird, welche beispielsweise eine Reststoffentfernung an der Werkstückoberseite zusätzlich unterstützt oder das Werkstück beim Bearbeitungspunkt kühlt.

Bevorzugt weisen die mehreren, nebeneinander angeordneten Düsen einen Abstand zueinander auf, der kleiner als der Abstand der Rostelemente zueinander ist. Dadurch wird verhindert, dass mit allen Düsen auf die Rostlatten geblasen wird. Zudem wird damit sichergestellt, dass im Bereich der Düsen alle Sektoren zwischen den Rostlatten durchströmt werden und - insbesondere im Gegensatz zu einem Düsenabstand, der grösser als der Abstand der Rostelemente zueinander ist - kein Sektor in diesem Bereich nicht durchströmt beziehungsweise ausgelassen wird. Vorteilhaft weisen alle Düsen in etwa den gleichen Abstand zueinander auf

Vorzugsweise ist die zumindest eine Düse auswechselbar in beziehungsweise an der zumindest einen Fluidzuführeinrichtung angeordnet, womit diese bedarfsweise ersetzt oder ausgetauscht werden kann. Die zumindest eine Düse nutzt sich im Gebrauch über eine gewisse Zeit ab. Durch die Auswechselbarkeit kann eine neue Düse als ein separates Bauteil vorgesehen werden und die zumindest eine Fluidzuführeinrichtung muss nicht als Ganzes ausgewechselt werden. Zudem können verschiedene Arten und/oder Ausgestaltungen von Düsen in beziehungsweise an der zumindest einen Fluidzuführeinrichtung vorgesehen werden, welche beispielsweise entsprechend der Art der Bearbeitung, der Art oder des Materials des Werkstücks und/oder der Art des Fluides ausgewählt werden.

Die Form und Ausgestaltung der zumindest einen Düse ist vorteilhaft derart ausgewählt, dass eine möglichst gerichtete oder möglichst breite Fluidzuführung im Arbeitsbereich des Laserbearbeitungskopfs erreicht wird. Je nach Art des bevorzugten Schneidprozesses sind auch verschiedene Düsenformen und Düsendurchmesser einsetzbar.

Bevorzugt ist die zumindest eine Düse zumindest in einem Freiheitsgrad beweglich in bzw. an der zumindest einen Fluidzuführeinrichtung angeordnet, womit eine oszillierende Strömung erzeugt werden kann. Vorteilhaft ist die zumindest eine Düse in mehrere Freiheitsgrad beweglich gelagert, so dass sich Strömungen in mehreren Richtungen erzeugen lassen. Beispielsweise ist die zumindest eine Düse in einem, vorteilhaft elastischen Lagerungskörper, der z. B. aus einem Elastomer oder einem Gummiwerkstoff gefertigt ist, angeordnet. Weiter vorteilhaft wird eine flexible Zuführleitung vorgesehen, damit die Zuführung des Fluids auch bei einer solchen Anordnung der zumindest einen Düse sichergestellt ist.

Bevorzugt ist die zumindest eine Düse in ihrer Ausrichtung relativ zu der zumindest einen Fluidzuführeinrichtung einstellbar, womit die Strömung bedarfsweise ausrichtbar ist und ein optimaler Anströmwinkel des Fluides auf das Werkstück erreichbar ist. Die Einstelleinrichtung für die zumindest eine Fluidzuführeinrichtung ist automatisch oder manuell betätigbar ausgebildet.

Als besonders vorteilhaft hat sich erwiesen, wenn das Fluid möglichst nahe an einer Werkstückkante eingeleitet wird, so dass an der Werkstückunterseite eine ausreichende Fluidschicht (Grenzschicht) erzeugt werden kann, jedoch der Bearbeitungsprozess, wie z. B. der Schneidprozess oder Einstechprozess, auf der Werkstückoberseite nicht gestört wird. Dies lässt sich mit zumindest einer ausrichtbaren Düse einfach sicherstellen. So kann es auch sinnvoll sein, die Gaszuführung unterhalb des Bleches anzuordnen und das Fluid schräg nach oben an die Blechunterseite zu zuführen.

Je nach Positionierung des Werkstücks relativ zum Laserbearbeitungskopf beziehungsweise des Laserbearbeitungskopfs relativ zum Werkstück verschiebt sich der optimale Anströmpunkt für eine optimale Strömung. In diesem Fall ist die Fluidzuführung entsprechend anzupassen.

In einer Variante ist nicht nur zumindest eine Düse, sondern die zumindest eine Fluidzuführeinrichtung als Gesamtes relativ zu der Auflageebene ausrichtbar, womit der Verlauf der Strömung ebenfalls bedarfsweise anpassbar ist.

Vorzugsweise ist das zugeführte Fluid ein Gas, da Gas als Fluid einfach zuführbar und zur Erzeugung der gewünschten Strömung besonders geeignet ist. Neben Luft können auch andere Gase zur Anwendung kommen, wobei je nach Art des Gases sich weitere Vorteile ergeben. Beispielsweise unterstützt Sauerstoff als Fluid den Schneidprozess beim Laserschneiden. Stickstoff als Fluid dient zudem als inertes Schutzgas beim Laserschneiden.

Weiter kann als Fluid auch Wasserdampf verwendet werden, der z. B. durch die Bindung von Rauchgas besondere Vorteile bietet.

Das Fluid z. B. Luft kann beispielsweise auch passiv, das heißt, lediglich durch die Wirkung der in Betrieb befindlichen Fluidabführeinrichtung zugeführt werden. Beispielsweise umfasst die Fluidabführeinrichtung dazu Absaugeinrichtungen und/oder Ventilatoren. Eine passive Fluidzufuhr kann auch durch einen im Staubsammelraum herrschenden Unterdruck erzeugt werden. Für eine vorteilhafte passive Fluidzuführung weist die zumindest eine Fluidzuführeinrichtung beispielsweise eine Öffnung auf, welche über eine Zuführleitung die gezielte Zuführung des entsprechenden Fluids (z. B. Luft) sicherstellt. Mit einer passiven Fluidzuführung kann gegenüber herkömmlichen Lösungen weiter Energie eingespart werden.

Bevorzugt wird ein gasförmiges Fluid eingeblasen, d. h. unter Druck in den Staubsammelraum eingebracht. Als besonders geeignet hat sich Pressluft (Druckluft) erwiesen, die kostengünstig zur Verfügung gestellt werden kann und oftmals Bestandteil einer bestehenden Infrastruktur ist, in denen Laserbearbeitungsmaschinen normalerweise aufgestellt werden.

Weiter vorteilhaft wird das Fluid gepulst eingeblasen, so dass sich die Strömungsschichten verschieben. Dadurch lässt sich zusätzlich Totwasser zwischen Strömungsschichten vermeiden.

Weiter vorteilhaft erfolgt das Zuführen des Fluids dynamisch, z. B. in Abhängigkeit von dem Schneidplan und/oder in Abhängigkeit der Position des Laserbearbeitungskopfs.

Bevorzugt ist zumindest eine Fluidregeleinrichtung zur Regulierung des Fluiddrucks vorgesehen, womit zur Erzeugung und Anpassung der gewünschten Strömung die Menge des ausgebrachten Fluides anpassbar und für den jeweiligen Einsatz optimierbar ist. So wird beispielsweise je nach Abstand zum Bearbeitungspunkt am Werkstück der Druck verändert, womit der Bearbeitungsprozess durch die Fluidzuführung nicht negativ beeinflusst wird.

Alternativ oder ergänzend reguliert die zumindest eine Fluidregeleinrichtung die Fluiddurchflussmenge, womit die bevorzugte Strömung einfach erzeugbar und anpassbar ist.

Mit den vorgenannten Maßnahmen kann die ausgebrachte Fluidmenge in Abhängigkeit des Bearbeitungsprozesses und/oder des Werkstückmaterials eingestellt oder verändert werden.

Vorteilhaft erfolgt die Anpassung der Fluidmenge dynamisch und weiter vorteilhaft basierend auf Daten aus der Steuerung der Laserbearbeitungsmaschine.

Vorzugsweise ist eine Schutzeinrichtung zum zumindest teilweisen Schützen zumindest der zumindest einen Fluidzuführeinrichtung vor bei der Bearbeitung anfallenden Reststoffen und/oder Werkstoffmaterialspritzern vorgesehen, womit die zumindest eine Fluidzuführeinrichtung insbesondere vor Verschmutzung geschützt wird und somit eine längere Gebrauchstauglichkeit derselben gegeben ist. Beispielsweise werden Klappenelemente vorgesehen, die bei einem Nichtgebrauch z. B. eines Teils der zumindest einen Fluidzuführeinrichtung zumindest vor diesen Teil positioniert wird.

Erfindungsgemäß ist eine Düsenreinigungseinrichtung für die zumindest eine Düse vorgesehen, welche dieselbe von allfällig vorhandenen Verschmutzungen befreit. Vorteilhaft ist die zumindest eine Düsenreinigungseinrichtung derart ausgebildet, so dass die zumindest eine Düse bedarfsweise automatisch gereinigt wird. Beispielsweise umfasst die Düsenreinigungseinrichtung zumindest eine Bürste, welche z. B. bedarfsweise aus einer Parkposition in eine Position zur Reinigung der zumindest einen Düse und wieder zurück überführbar ist.

Vorzugsweise sind zumindest zwei Fluidzuführeinrichtungen vorgesehen, was insbesondere bei größeren Formaten des Werkstücks vorteilhaft ist. Mit den zumindest zwei Fluidzuführeinrichtungen ist bei einem geringen Energiebedarf auch bei diesen Werkstücken eine optimale Strömung erzeugbar. Die zumindest eine Fluidabführeinrichtung ist bei einer solchen Ausführung beispielsweise an einer stirnseitigen Seite des Staubsammelraums oder zentral z. B. in der Mitte des Staubsammelraums vorgesehen. In einer Ausführung mit zweiseitiger Fluidzuführung hat sich zudem eine gepulste Zuführung als besonders vorteilhaft erwiesen, da sich damit Strömungsschichten in unterschiedlichen Ausrichtungen beziehungsweise Ausdehnungen erzeugen lassen.

Vorteilhaft sind die zumindest zwei Fluidzuführeinrichtungen einander gegenüberliegend angeordnet, womit eine große Länge beziehungsweise Fläche der Werkstückunterseite mit geringem Strömungsdruck der Strömung abgedeckt werden kann.

Die zumindest zwei Fluidzuführeinrichtungen sind beispielsweise zueinander versetzt einander gegenüberliegend angeordnet, womit insbesondere bei einem Auflagerost mit Rostelementen zwischen diesen einfach gegenläufige Strömungen zur Beseitigung von Rauchgasen unter dem Werkstück erzeugbar sind. Dabei ist es denkbar, das Fluid alternierend jeweils von einer Seite mittels einer der zumindest zwei Fluidzuführeinrichtungen zu zuführen.

Alternativ sind die zumindest zwei Fluidzuführeinrichtungen direkt einander gegenüberliegend angeordnet, was bei zumindest einer im Staubsammelraum angeordneten Fluidabführeinrichtung vorteilhaft ist.

Beispielsweise mit einer auf die Strömungsverhältnisse im Staubsammelraum abgestimmte Anordnung der zumindest einen Fluidabführeinrichtung lässt sich verhindern, dass durch die gegeneinander gerichteten Strömungen gegebenenfalls Zonen mit Verwirbelungen entstehen.

Weiter vorteilhaft sind die zumindest zwei Fluidzuführeinrichtungen synchron miteinander verfahrbar, um eine optimale Abdeckung mit den erzeugten Strömungen zu gewährleisten. Dabei können die zumindest zwei Fluidzuführeinrichtungen konstruktiv miteinander gekoppelt und/oder an der Brücke angeordnet sein.

In einer Alternative werden sind die zumindest zwei Fluidzuführeinrichtungen separat voneinander verfahrbar, aber vorteilhaft jeweils derart gesteuert, dass diese nur synchron verfahren. Dazu kann eine einzige Steuerung vorgesehen sein oder mehrere Steuerungen, die dann jedoch vorteilhaft miteinander kommunizieren.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

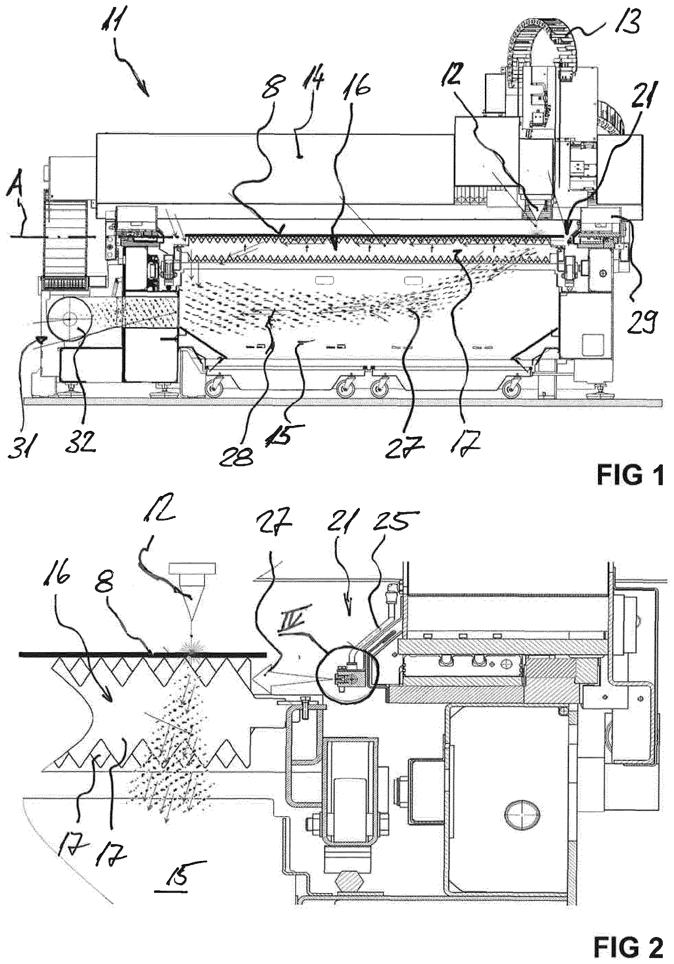

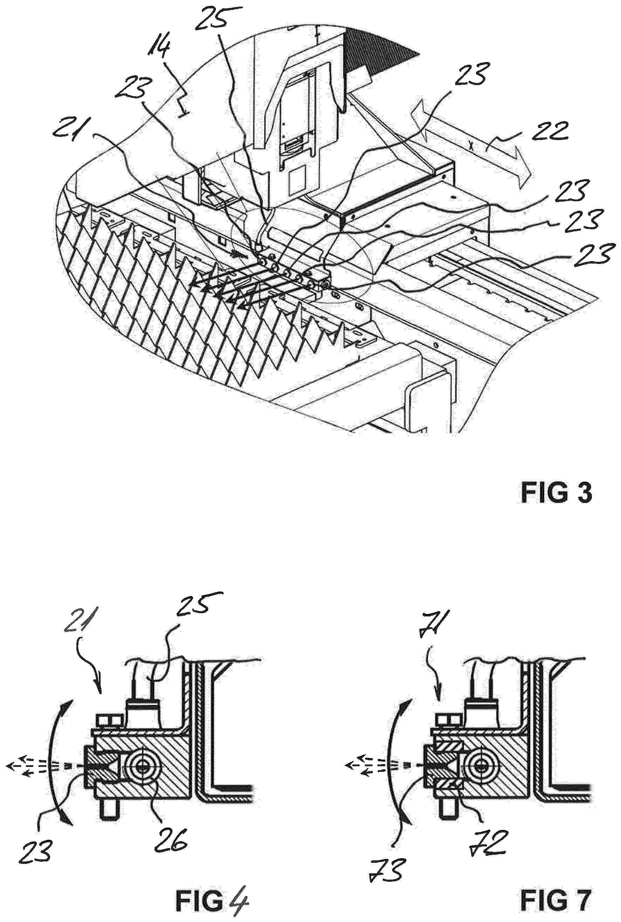

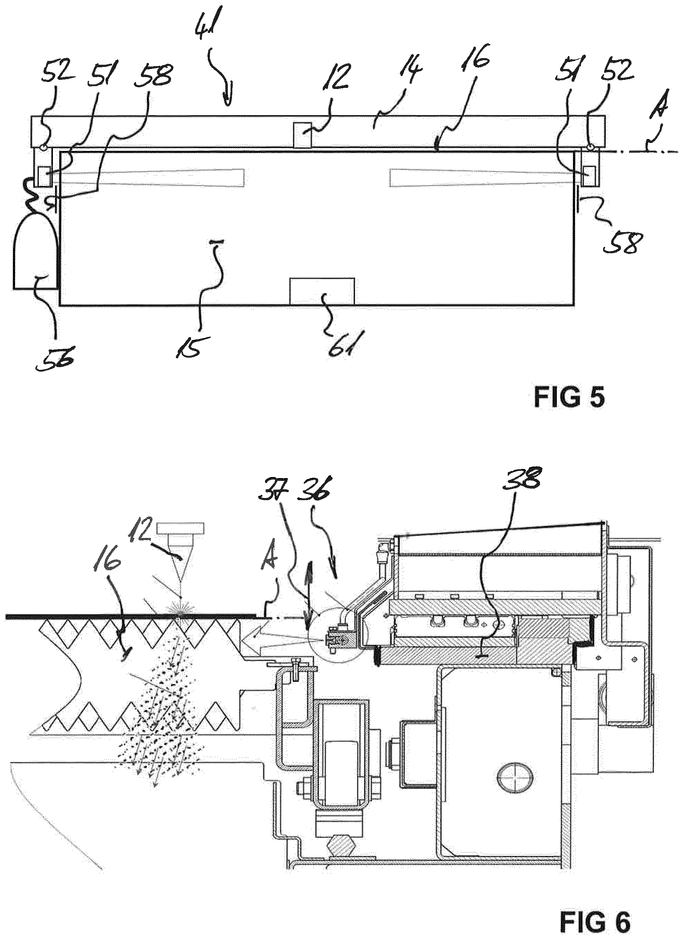

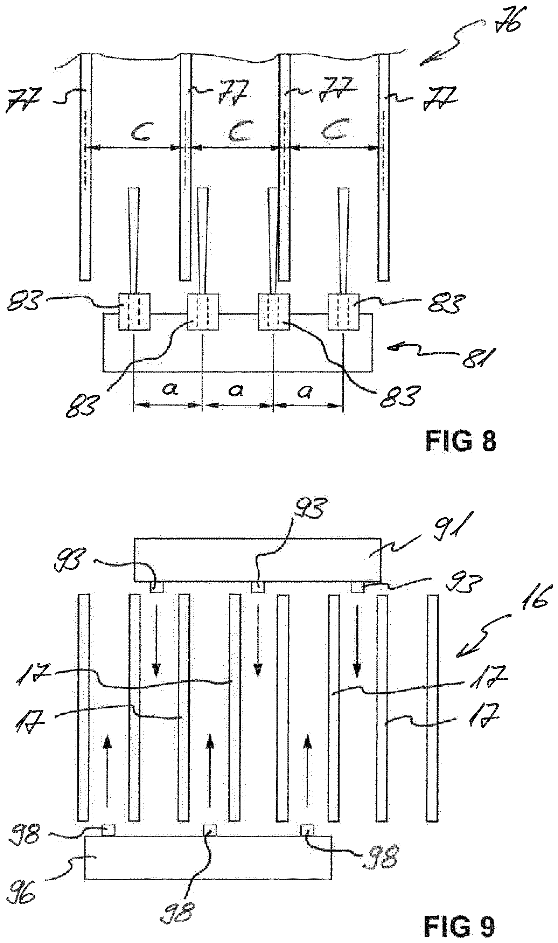

## Patentansprüche

1. Laserbearbeitungsmaschine, insbesondere eine Laserschneidmaschine, mit einem Laserbearbeitungskopf (12), insbesondere einem Laserschneidkopf, mit einem Auflagerost (16), der eine Auflageebene (A) für die Auflage eines zu bearbeitenden Werkstücks (8) definiert, mit zumindest einer Fluidzuführeinrichtung (21; 36; 51) und mit zumindest einer Fluidabführeinrichtung (31; 61), wobei die Fluidzuführeinrichtung (21; 36; 51) und die Fluidabführeinrichtung (31; 61) zur Erzeugung einer Fluidströmung (27) unterhalb der Auflageebene (A) des Auflagerostes (16) zur Abführung insbesondere von Rauchgas (28) und Staub ausgebildet sind, **dadurch gekennzeichnet, dass** die zumindest eine Fluidzuführeinrichtung (21; 36; 51) mit zumindest einer Düse (23, 73, 83, 93, 98) ausgebildet und unterhalb der Auflageebene (A) angeordnet und mit dem Laserbearbeitungskopf (12), vorzugsweise parallel in eine Verfahrrichtung von diesem, verfahrbar ist und weiterhin **gekennzeichnet durch** eine Düsenreinigungseinrichtung zur Reinigung der zumindest einen Düse (23, 73, 83, 93, 98).

2. Laserbearbeitungsmaschine nach Anspruch 1, **dadurch gekennzeichnet, dass** der Auflagerost (16) mehrere, parallel und in einem Abstand (C) beabstandet zueinander angeordnete Rostelemente (17) umfasst, wobei die zumindest eine Fluidzuführeinrichtung (21; 36; 51) zur Erzeugung einer parallel zu den Rostelementen (17) verlaufenden Fluidströmung (27) ausgebildet ist.

3. Laserbearbeitungsmaschine nach Anspruch 1 oder 2, **dadurch gekennzeichnet, dass** die zumindest eine Fluidzuführeinrichtung (21; 51) und der Laserbearbeitungskopf (12) an einer gemeinsamen Brücke (14) angeordnet sind, die relativ zu dem Auflagerost (16) verfahrbar ist.

4. Laserbearbeitungsmaschine nach Anspruch 1 oder 2, **dadurch gekennzeichnet, dass** die zumindest eine Fluidzuführeinrichtung (36) an einer separaten Führung (38) angeordnet und entlang des Auflagerostes (16) verfahrbar ist.

5. Laserbearbeitungsmaschine nach einem der Ansprüche 1 bis 4, **dadurch gekennzeichnet, dass** die zumindest eine Fluidzuführeinrichtung (36) relativ zur Auflageebene (A) des Auflagerostes (16) einstellbar ist.

6. Laserbearbeitungsmaschine nach einem der Ansprüche 1 bis 5, **dadurch gekennzeichnet, dass** die zumindest eine Fluidzuführeinrichtung (21; 36; 51) mehrere, nebeneinander angeordnete Düsen (23) aufweist, wobei vorzugsweise mehrere Düsen (23) auf einer gemeinsamen Linie angeordnet sind, wobei weiter vorteilhaft die gemeinsame Linie derart ausgerichtet ist, dass diese parallel zur Auflageebene (A) des Auflagerostes (16) verläuft.

7. Laserbearbeitungsmaschine nach Anspruch 6, **dadurch gekennzeichnet, dass** die mehreren, nebeneinander angeordnete Düsen (83) einen Abstand (a) zueinander aufweisen, der kleiner als der Abstand (A) der Rostelemente (77) zueinander ist.

8. Laserbearbeitungsmaschine nach einem der vorangehenden Ansprüche, **dadurch gekennzeichnet, dass** die zumindest eine Düse (23) auswechselbar in bzw. an der zumindest einen Fluidzuführeinrichtung (21) angeordnet ist.

9. Laserbearbeitungsmaschine nach einem der vorangehenden, **dadurch gekennzeichnet, dass** die zumindest eine Düse (23) zumindest in einem Freiheitsgrad beweglich in bzw. an der zumindest einen Fluidzuführeinrichtung (21) angeordnet ist.

10. Laserbearbeitungsmaschine nach einem der vorangehenden Ansprüche, **dadurch gekennzeichnet, dass** die zumindest eine Düse (23) in ihrer Ausrichtung relativ zu der zumindest einen Fluidzuführeinrichtung (21) einstellbar ist.

11. Laserbearbeitungsmaschine nach einem der vorangehenden Ansprüche, **dadurch gekennzeichnet, dass** das zugeführte Fluid ein Gas ist, das vorzugsweise einblasbar und weiter bevorzugt gepulst einblasbar ist.

12. Laserbearbeitungsmaschine nach einem der vorangehenden Ansprüche, **dadurch gekennzeichnet, dass** zumindest eine Fluidregeleinrichtung (29) zur Regulierung des Fluiddrucks und/oder der Fluiddurchflussmenge vorgesehen ist.

13. Laserbearbeitungsmaschine nach einem der vorangehenden Ansprüche, **dadurch gekennzeichnet, dass** eine Schutzeinrichtung (58) zum zumindest teilweisen Schützen zumindest der zumindest einen Fluidzuführeinrichtung (51) vor bei der Bearbeitung anfallenden Reststoffen vorgesehen ist.

14. Laserbearbeitungsmaschine nach einem der vorangehenden Ansprüche, **dadurch gekennzeichnet, dass** zumindest zwei Fluidzuführeinrichtungen (51) vorgesehen sind, die vorzugsweise einander gegenüberliegend zueinander versetzt oder direkt einander gegenüberliegend angeordnet sind und die weiter bevorzugt synchron mit einander verfahrbar sind.

## Claims

1. A laser processing machine, in particular a laser cutting machine, having a laser processing head (12), in particular a laser cutting head, having a support grid (16) which defines a support plane (A) for supporting a workpiece (8) to be processed, having at least one fluid supply device (21; 36; 51) and having at least one fluid discharge device (31; 61), wherein the fluid supply device (21; 36; 51) and the fluid discharge device (31; 61) are designed to generate a fluid flow (27) below the support plane (A) of the support grid (16) for discharging, in particular, smoke (28) and dust, **characterized in that** the at least one fluid supply device (21; 36; 51) is formed with at least one nozzle (23, 73, 83, 93, 98) and is arranged below the support plane (A) and can be moved with the laser processing head (12), preferably parallel thereto in a direction of travel thereof, and further **characterized by** a nozzle cleaning device for cleaning the at least one nozzle (23, 73, 83, 93, 98).

2. The laser processing machine according to claim 1, **characterized in that** the support grid (16) comprises multiple grid elements (17) arranged parallel to and spaced apart from one another at a distance (C), wherein the at least one fluid supply device (21; 36; 51) is designed to generate a fluid flow (27) running parallel to the grid elements (17).

3. The laser processing machine according to claim 1 or 2, **characterized in that** the at least one fluid supply device (21; 51) and the laser processing head (12) are arranged on a common bridge (14) which is movable relative to the support grid (16).

4. The laser processing machine according to claim 1 or 2, **characterized in that** the at least one fluid supply device (36) is arranged on a separate guide (38) and is movable along the support grid (16).

5. The laser processing machine according to any one of claims 1 to 4, **characterized in that** the at least one fluid supply device (36) is adjustable relative to the support plane (A) of the support grid (16).

6. The laser processing machine according to any one of claims 1 to 5, **characterized in that** the at least one fluid supply device (21; 36; 51) has multiple nozzles (23) arranged next to one another, wherein preferably multiple nozzles (23) are arranged on a common line, wherein further advantageously the common line is aligned such that it runs parallel to the support plane (A) of the support grid (16).

7. The laser processing machine according to claim 6, **characterized in that** the multiple nozzles (83) arranged next to one another have a distance (a) from one another which is smaller than the distance (A) of the grid elements (77) from one another.

8. The laser processing machine according to any one of the preceding claims, **characterized in that** the at least one nozzle (23) is arranged in or on the at least one fluid supply device (21) in an exchangeable manner.

9. The laser processing machine according to any one of the preceding claims, **characterized in that** the at least one nozzle (23) is arranged in or on the at least one fluid supply device (21) in a manner movable at least in one degree of freedom.

10. The laser processing machine according to any one of the preceding claims, **characterized in that** the at least one nozzle (23) is adjustable in its orientation relative to the at least one fluid supply device (21).

11. The laser processing machine according to any one of the preceding claims, **characterized in that** the supplied fluid is a gas which is preferably injectable and further preferably injectable in a pulsed manner.

12. The laser processing machine according to any one of the preceding claims, **characterized in that** at least one fluid control device (29) is provided for regulating the fluid pressure and/or the fluid flow rate.

13. The laser processing machine according to any one of the preceding claims, **characterized in that** a protective device (58) is provided for at least partially protecting at least the at least one fluid supply device (51) from residue produced during processing.

14. The laser processing machine according to any one of the preceding claims, **characterized in that** at least two fluid supply devices (51) are provided, which are preferably arranged opposite one another in a manner offset from one another or directly opposite one another, and which can further preferably be moved synchronously with one another.

## Revendications

1. Machine de traitement au laser, en particulier machine de découpe au laser, avec une tête de traitement au laser (12), en particulier une tête de découpe au laser, avec une grille de support (16) qui définit un plan de support (A) pour le support d'une pièce (8) à traiter, avec au moins un dispositif d'alimentation en fluide (21 ; 36 ; 51) et avec au moins un dispositif d'évacuation de fluide (31 ; 61), dans laquelle le dispositif d'alimentation en fluide (21 ; 36 ; 51) et le dispositif d'évacuation de fluide (31 ; 61) sont formés pour la génération d'un flux de fluide (27) sous le plan de support (A) de la grille de support (16) pour l'évacuation en particulier des gaz de fumée (28) et de la poussière, **caractérisée en ce que** l'au moins un dispositif d'alimentation en fluide (21 ; 36 ; 51) est formé avec au moins une buse (23, 73, 83, 93, 98) et est agencé sous le plan de support (A) et peut être déplacé avec la tête de traitement au laser (12), de préférence parallèlement dans une direction de déplacement de celui-ci et **caractérisée en outre par** un dispositif de nettoyage de buse pour le nettoyage de l'au moins une buse (23, 73, 83, 93, 98).

2. Machine de traitement au laser selon la revendication 1, **caractérisée en ce que** la grille de support (16) comprend une pluralité d'éléments de grille (17) qui sont agencés parallèlement et espacés d'une distance (C) les uns des autres, dans laquelle l'au moins un dispositif d'alimentation en fluide (21 ; 36 ; 51) est formé pour générer un flux de fluide (27) s'écoulant parallèlement aux éléments de grille (17).

3. Machine de traitement au laser selon la revendication 1 ou 2, **caractérisée en ce que** l'au moins un dispositif d'alimentation en fluide (21 ; 51) et la tête de traitement au laser (12) sont agencés sur un pont commun (14) qui peut être déplacé par rapport à la grille de support (16).

4. Machine de traitement au laser selon la revendication 1 ou 2, **caractérisée en ce que** l'au moins un dispositif d'alimentation en fluide (36) est agencé sur une pièce de guidage (38) séparée et peut être déplacé le long de la grille de support (16).

5. Machine de traitement au laser selon l'une quelconque des revendications 1 à 4, **caractérisée en ce que** l' au moins un dispositif d'alimentation en fluide (36) est réglable par rapport au plan de support (A) de la grille de support (16).

6. Machine de traitement au laser selon l'une quelconque des revendications 1 à 5, **caractérisée en ce que** l'au moins un dispositif d'alimentation en fluide (21 ; 36 ; 51) présente plusieurs buses (23) agencées les unes à côté des autres, dans laquelle de préférence plusieurs buses (23) sont agencées sur une ligne commune, dans laquelle la ligne commune est en outre avantageusement alignée de manière à être parallèle au plan de support (A) de la grille de support (16).

7. Machine de traitement au laser selon la revendication 6, **caractérisée en ce que** la pluralité de buses (83) agencées les unes à côté des autres présentent une distance (a) les unes par rapport aux autres qui est inférieure à la distance (A) des éléments de grille (77) les uns par rapport aux autres.

8. Machine de traitement au laser selon l'une quelconque des revendications précédentes, **caractérisée en ce que** l'au moins une buse (23) est agencée dans ou sur l'au moins un dispositif d'alimentation en fluide (21) de manière interchangeable.

9. Machine de traitement au laser selon l'une quelconque des précédentes, **caractérisée en ce que** l'au moins une buse (23) est agencée dans ou sur l'au moins un dispositif d'alimentation en fluide (21) de manière à pouvoir être déplacée au moins selon un degré de liberté.

10. Machine de traitement au laser selon l'une quelconque des revendications précédentes, **caractérisée en ce que** l'alignement de l'au moins une buse (23) est réglable par rapport à l'au moins un dispositif d'alimentation en fluide (21).

11. Machine de traitement au laser selon l'une quelconque des revendications précédentes, **caractérisée en ce que** le fluide alimenté est un gaz qui peut de préférence être insufflé et plus préférentiellement insufflé de manière pulsée.

12. Machine de traitement au laser selon l'une quelconque des revendications précédentes, **caractérisée en ce qu'**au moins un dispositif de régulation de fluide (29) est prévu pour réguler la pression de fluide et/ou le débit de fluide.

13. Machine de traitement au laser selon l'une quelconque des revendications précédentes, **caractérisée en ce qu'**un dispositif de protection (58) est prévu pour protéger au moins partiellement au moins l'au moins un dispositif d'alimentation en fluide (51) des résidus se produisant lors du traitement.

14. Machine de traitement au laser selon l'une quelconque des revendications précédentes, **caractérisée en ce qu'**au moins deux dispositifs d'alimentation en fluide (51) sont prévus, qui sont de préférence décalés l'un par rapport à l'autre et en regard l'un de l'autre ou agencés directement l'un en regard de l'autre et qui peuvent de préférence être déplacés de manière synchrone l'un avec l'autre.
